# EUROPÄISCHE PATENTSCHRIFT

(11) **EP 1 044 612 B1**
(45) Veröffentlichungstag und Bekanntmachung des Hinweises auf die Patenterteilung: **14.05.2003**
(21) Anmeldenummer: 00107499.6
(22) Anmeldetag: 06.04.2000
(51) Int. Cl.: A22C 11/08

(54) **Verfahren und Vakuumfüller zum Abfüllen einer pastösen Masse**
Method and vacuum filler for filling pasty masses
Méthode et remplisseur sous vide pour remplir avec des produits pâteux

(30) Priorität: 13.04.1999 DE 19916582
(43) Veröffentlichungstag der Anmeldung: 18.10.2000
(73) Patentinhaber: Albert Handtmann Maschinenfabrik GmbH & Co. KG, 88400 Biberach (DE)
(72) Erfinder: Zinser, Georg, 88456 Winterstettenstadt (DE); Pick, Georg, 88400 Biberach (DE)
(74) Vertreter: Grünecker, Kinkeldey, Stockmair & Schwanhäusser Anwaltssozietät

(56) Entgegenhaltungen:
- CH-A- 685 169
- DE-C- 4 214 638
- DE-U- 29 722 550
- US-A- 3 742 556

## Beschreibung

Die Erfindung betrifft ein Verfahren zum Abfüllen einer pastösen Masse gemäß dem Oberbegriff des Anspruchs 1 und einen Vakuumfüller zum Abfüllen einer pastösen Masse mit den Merkmalen des Oberbegriffs des Anspruchs 5. Eine Fleischemulsions-pumpe ist aus der US 3 742 556 bekannt.

Es sind Vakuumfüller zum Fördern von Wurstbrät bekannt, die als Dosieraggregat ein Flügelzellenförderwerk umfassen. Ein solcher Vakuumfüller wird beispielsweise in der europäischen Patentschrift EP 0 432 388 B2 beschrieben. Eine weitere Ausführungsform eines Flügelzellenförderwerks zur Verwendung in einem Vakuumfüller ist beispielsweise in der deutschen Offenlegungsschrift DE 42 27 621 A1 offenbart.

Bei solchen Vakuumfüllern kann das Evakuieren von der im Flügelzellenförderwerk zu fördernden Masse nur durch Spalte an Stellen, an denen sich Förderwerkflügel, Rotor und Förderwerkgehäuse berühren, erreicht werden. Diese Spalte dürfen nur so groß sein, dass insbesondere dann, wenn das Förderwerk bei angeschalteter Vakuumpumpe stillsteht, keine Masse durchgezogen werden kann, weil diese sonst in den Vakuumkanal gesaugt und diesen dann verstopfen würde. Diese klein zu haltende Spaltbreite erschwert aber das Evakuieren, weil dadurch die Saugwirkung beschränkt bzw. begrenzt wird.

Die Aufgabe der vorliegenden Erfindung besteht deshalb darin, ein Verfahren und einen Vakuumfüller zur Verfügung zu stellen, mit dem eine effizientere Unterdruckerzeugung zur Unterstützung der Einziehung des Bräts ermöglicht ist , bei gleich zeitigen Vermeichung von Langzestablagerungen.

Gelöst wird diese Aufgabe durch ein Verfahren mit den Merkmalen des Anspruchs 1 und einen Vakuumfüller mit den Merkmalen des Anspruchs 5. Vorteilhafte Ausführungsformen sind Gegenstand von Unteransprüchen.

Dadurch, dass der Unterdruck im Flügelzellenförderwerk im Wesentlichen nur bei sich drehenden Flügelzellen erzeugt wird und somit nicht bei stillstehendem Rotor, wird der Unterdruck nur dann erzeugt, wenn das Brät in die Flügelzellen eingefüllt und durch Drehung der Flügelzellen portionsweise an den Auslass des Flügelzellenförderwerks weitertransportiert wird. Der mechanische Transport des Bräts verhindert dabei, daß das Brät in den Vakuumkanal eingezogen wird.

Weil aber kein Unterdruck während der Zeitdauer einer Unterbrechung des Betriebs, also bei stillstehendem Flügelzellenförderwerk, wirkt, können die wirksamen Spaltquerschnitte größer als im Stand der Technik verwirklicht werden. Die Spaltgröße ist nur auf ein Mass begrenzt, das sicherstellt, dass bei laufendem Förderwerk kein Brät in den Vakuumkanal gedrückt oder gesaugt wird. Deshalb kann der Spalt größer bzw. eine größere Tiefe als bei Vakuumfüllern nach dem Stand der Technik haben, was dann zu der angestrebten effizienteren Erzeugung von Unterdruck führt.

Bevorzugt ist dabei die durch den Unterdruck bewirkte Rücksaugung entgegengesetzt zur Drehrichtung der Flügelzellen gerichtet. Dadurch wird evtl. in den Unterdruckbereich gelangtes Brät bei laufendem Förderwerk aus diesem heraus weg von der Mündung des Absaugkanals in Richtung des Brätauslasses befördert und somit ein Einsaugen von Brätmasse in den Vakuumkanal verhindert.

Besonders bevorzugt wird der Unterdruck nach dem Einschalten des Förderwerkes verzögert erzeugt, insbesondere erst dann, wenn sich bereits eine erste Flügelzelle an der Vakuumöffnung vorbeibewegt hat. In diesem Fall wird durch die sich an der Vakuumöffnung vorbeibewegende Flügelzelle das in der Nähe der Vakuumöffnung evtl. angesammelte Brät weggeschoben, so dass es nicht durch das entstehende Vakuum in den Vakuumkanal gelangen kann.

In einer vorteilhaften Ausführungsform des Verfahrens wird der Unterdruck automatisch bei sich drehenden Flügelzellen erzeugt. Weil das Bedienpersonal sich nicht selbst um die Erzeugung und das Abschalten des Unterdrucks bei sich drehendem bzw. stillstehendem Förderwerk kümmern muss, ist eine einfache Handhabung des Vakuumfüllers gegeben.

Ein erfindungsgemäßer Vakuumfüller zeichnet sich dadurch aus, dass er ein Verschlusselement zum zumindest teilweisen Öffnen und Verschliessen der Vakuumöffnung aufweist, d.h. ein Organ, das die Durchleitung des im Vakuumkanals vorhandenen Unterdrucks in den Bereich des Förderwerkes entweder zulässt oder sperrt. Dadurch, dass die Vakuumöffnung zum Förderwerk hin im Gegensatz zum Stand der Technik somit keinen konstanten Öffnungsquerschnitt hat, sondern durch ein Verschlusselement dieser Öffnungsquerschnitt auch verringert oder die Vakuumöffnung ganz verschlossen werden kann, ist es möglich, dass der Unterdruck im Förderwerk nur im Wesentlichen bei sich drehenden Flügelzellen erzeugt werden kann, wodurch sich die bereits oben beschriebenen Vorteile ergeben.

Dabei ist das Verschlusselement bevorzugt im Übergangsbereich vom Vakuumkanal zu Innenraum des Förderwerkgehäuses angeordnet. Das Verschlusselement kann in diesem Bereich wirksam das Förderwerk vom gesamten Vakuumkanal absperren.

Vorteilhafterweise ist dabei die Vakuumöffnung in einem oberen Bereich der Wandung des Flügelzellenförderwerks angeordnet. Da sich Brätmasse meist am Boden, d.h., in einem unteren Bereich einer Flügelzelle ansammelt, wird durch das davon beabstandete Anbringen der Vakuumöffnung in einem oberen Bereich das Einlaufen von Brätmasse in die mit einer Vakuumquelle in Verbindung stehende Vakuumöffnung bzw. den Vakuumkanal erschwert bzw. weiter verhindert.

Erfindungsgemäß ist das Verschlusselement mit seiner zum Inneren des Förderwerkgehäuses gerichteten Fläche so angebracht und ausgebildet, dass die Flügel der Flügelzellen bei sich drehenden Flügelzellen an dieser Fläche entlang streichen. Somit ist die dem Inneren des Förderwerkgehäuses zugewandte Seite des Verschlusselementes als ein Teil der von den Flügel überstrichenen Aussenkontur des Flügelzellenförderwerkes ausgebildet, was zur Folge hat, dass die Flügel sich dort gegebenenfalls ansetzendes Brät immer wieder abstreifen, so dass ein Reinigungseffekt bewirkt wird und sich keine Langzeitablagerungen am Verschlusselement bilden.

Bevorzugt ist das Verschlusselement als Schieber ausgebildet, weil sich dann das Verschlusselement mechanisch einfach realisieren und sich auf einfache Weise durch Verschieben des Schiebers die Vakuumöffnung des Vakuumkanals verschliessen und wieder öffnen lässt.

Bevorzugt wird dabei der Schieber an einem in der Wandung des Förderwerkgehäuses gelagerten Federstab lösbar angeordnet. Der Federstab wird zweckmässig so geformt, dass er die Vakuumöffnung nicht wesentlich versperrt. Er kann in Betriebsposition mit einem Ende in der Wandung des Förderwerkgehäuses verschiebbar gelagert und mit dem anderen Ende mit dem Stellantrieb für den Schieber verbunden sein. Der Federstab bewegt und hält dann den Schieber in seiner Öffnungs- und Schliessposition, andererseits erlaubt er den einfachen Ausbau zum Reinigen des Schiebers, wenn der Federstab in eine Position verbracht werden kann, in der er aus der Lagerung im Förderwerkgehäuse freikommt und dann nach hinten zur Freigabe des Schiebers umgebogen werden kann.

Das Verschlusselement, z.B. der Schieber, kann von einer Bedienperson manuell jeweils zum Schliessen und Öffnen der Vakuumöffnung verschoben werden, bevorzugt wird das Verschlusselement jedoch mit einem elektromotorischen Stellantrieb verbunden, um ein automatisches, an den Anlauf und das Abschalten des Förderwerks gekoppeltes Steuern des Schiebers zu ermöglichen. Alternativ kann als Stellglied auch ein Pneumatikzylinder verwendet werden.

Der elektromotorische Stellantrieb wird mit der Maschinensteuerung verbunden, so dass er in Abhängigkeit vom Betriebszustand des Rotors gesteuert werden kann, d.h. wenn das Flügelzellenförderwerk in Betrieb gesetzt wird und dann die Flügelzellen die zu portionierende Brätmasse aufnehmen und zum Brätausgang befördern, kann die Vakuumöffnung automatisch durch Ansteuerung des elektromotorischen Stellantriebs geöffnet (gegebenenfalls mit zeitlicher Verzögerung) und nach Abschalten des Förderwerkes wieder verschlossen werden.

Im Folgenden wird die Erfindung anhand der Zeichnungen näher erläutert.

Es zeigen:
- Figur 1: eine perspektivische Ansicht von schräg oben auf ein bekanntes Flügelzellenförderwerk, bei dem der Deckel aufgeklappt ist;
- Figur 2: eine schematische Draufsicht auf das bekannte Flügelzellenförderwerk nach Figur 1 bei abgenommenem Deckel;
- Figur 3: eine schematische Draufsicht auf ein Flügelzellenförderwerk eines erfindungsgemäßen Vakuumfüllers, bei abgenommenem Deckel,
- Figur 4: einen Teilschnitt entlang der Linie IV-IV in Figur 3;
- Figur 5: einen Querschnitt entlang der Linie V-V in Figur 3, bei dem die Vakuumöffnung geöffnet ist und
- Figur 6: einen Querschnitt entlang der Linie V-V in Figur 3, bei dem die Vakuumöffnung verschlossen ist.

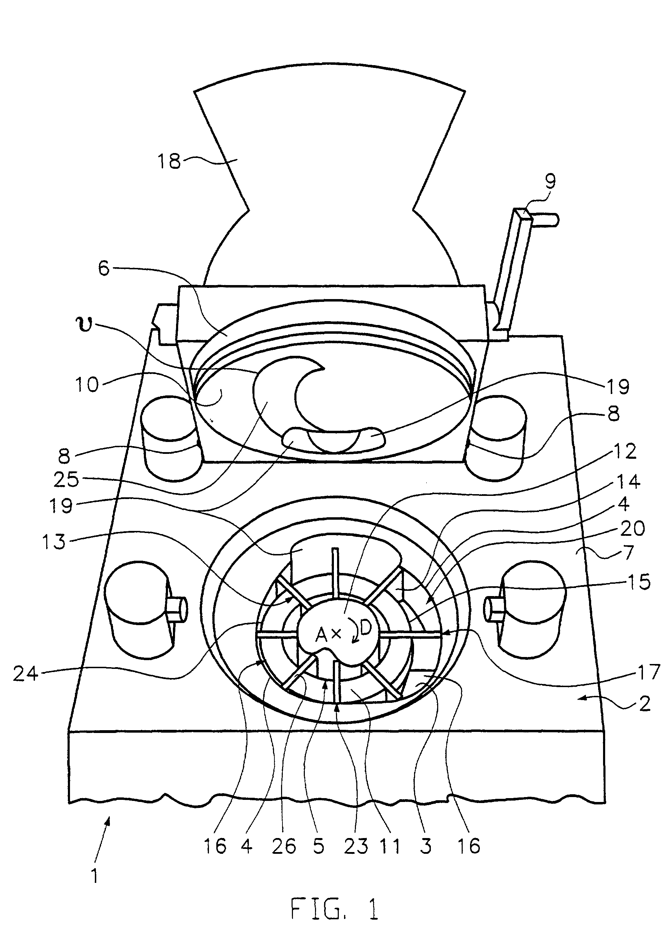

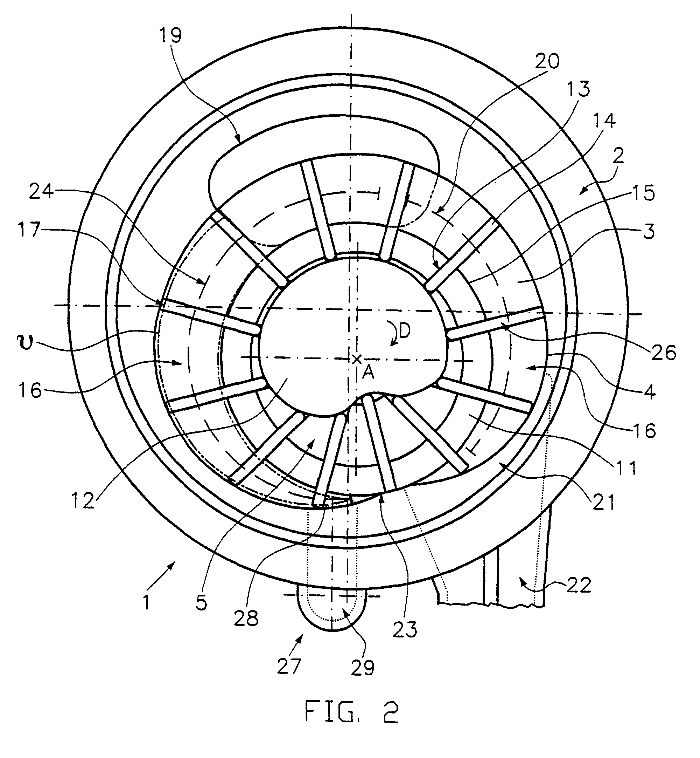

Zuerst werden einige der einem bekannten und einem erfindungsgemäßen Vakuumfüller gemeinsamen Merkmale anhand der Figuren 1 und 2 näher beschrieben.

Das in Figur 1 insgesamt mit 1 bezeichnete Flügelzellenförderwerk hat ein Gehäuse 2 mit einem durch eine Bodenplatte 3 und eine seitliche Gehäuseinnenwand 4 begrenzten Innenraum 5, der mit einem Deckel 6 nach oben absschliessbar ist. In der in Figur 1 dargestellten Lage ist zu Reinigungszwecken oder dergl. der Deckel 6 in seiner aufgeklappten Lage dargestellt, so dass der Innenraum 5 des Förderwerkgehäuses 2 zu sehen ist.

Zum Schliessen kann der um eine an der Gehäuseoberseite 7 angebrachte Drehachse 8 schwenkbare Deckel mittels eines Hebels 9 in die das Förderwerk 1 abschliessende Betriebsposition verschwenkt werden, in der die untere Deckelplatte 10 den Innenraum 5 des Förderwerkes 1 nach oben hin abgrenzt.

Im Innenraum 5 des Förderwerks 1 ist ein Rotor 11 exzentrisch um einen Spannexzenter 12 gelagert. Der Rotor 11 ist durch eine nicht dargestellte, im Gehäuse 2 gelagerte Antriebswelle in Drehung versetzbar. In dem ringförmig ausgebildeten Rotor 11 sind Radialschlitze 13 eingearbeitet, in welchen die Flügel 14 radial verschiebbar gelagert sind. Die Flügel 14 bilden mit der Innenwandung 4, dem Boden 3, der Deckelplatte 10 und der Aussenfläche 15 des Rotors 11 Flügelzellen 16.

Die Aussenseiten 17 der Flügel 14 streichen während ihrer Drehbewegung an der Innenwandung 4 des Gehäuses 2 entlang. Das Volumen der als Förderzellen wirkenden Flügelzellen 16 ändert sich dabei in Drehrichtung D des Rotors 11 gesehen. Diese Volumenänderungen werden durch die Kontur der Innenwand 4 bestimmt.

Auf der Oberseite des Deckels sitzt der Einlasstrichter 18, dessen unteres Ende den Bräteinlass 19 zum Einfüllen des zu portionierenden Bräts in die sich darunter befindlichen Flügelzellen 16 bildet. An den Bräteinlass 19 schliesst sich, in Drehrichtung D gesehen, ein Druckbereich 20 an, in dem sich die Flügelzellen 16 in ihrem Volumen verkleinern. Dieser mündet in einen in Figur 2 abgebildeten Brätauslass 21, der zu einem Auslaufrohr 22 führt, das an eine Abdrehvorrichtung (nicht gezeigt) angeschlossen ist.

Dem Brätauslass 21 folgt, wiederum in Drehrichtung D gesehen, ein Abdichtbereich 23, in dem die Aussenfläche 15 des Rotors 11 in direkten Kontakt mit der Innenwand 4 des Gehäuses 2 kommt.

An den Abdichtbereich 23 schliesst sich der Vakuumbereich 24 an, der bis zum Bräteinlass 19 reicht. In diesem Vakuumbereich 24 wird Unterdruck erzeugt, der das Einfüllen des Bräts erleichtert. Hierzu weist der Deckel 6 auf der dem Förderwerkinnenraum 5 zugewandten Seite 10 eine vertiefte Nutfläche 25 auf, deren Umriss auch in Figur 2 durch die strichpunktierte Linie in der Betriebsposition angedeutet ist. Die Nutfläche 25 überdeckt bei geschlossenem Deckel 9 die Flügelzellen 16 in dem Vakuumbereich 24 und belässt dabei einen Spalt zwischen Deckelunterseite 10 und Flügeloberseite 26, dessen Größe im wesentlichen der Nuttiefe entspricht. Während die zwischen Bräteinlass 19 und Brätauslass 21 gelegenen Flügelzellen 16 im Wesentlichen abgedichtet sind, ist somit durch diesen Spalt 25 zwischen den einzelnen Flügelzellen 16 im Vakuumbereich 24 eine freie Verbindung zur Erzeugung von Unterdruck gegeben, der mit allgemein als Vakuumvorrichtung 27 bezeichneten Elementen erzeugt werden kann.

Wie in Figur 2 zu erkennen, umfassen diese Elemente der Vakuumvorrichtung 27 eine am Anfang des Vakuumbereichs 24 seitlich in der Gehäuseinnenwandung 4 ausgebildete, in das Innere einer Flügelzelle 16 mündende Vakuumöffnung 28, die über einen Vakuumkanal 29 mit einer nicht dargestellten Vakuumquelle verbunden ist.

Ist nun der mit dem Einlasstrichter 18 verbundene Bräteinlass 19 mit Brät dicht gefüllt, so kann mit der Vakuumvorrichtung 27 im Vakuumbereich 24 des Flügelzellenförderwerks 1 zwischen Vakuumöffnung 28 und Einlass 19 ein Unterdruck erzeugt werden, der ein vakuumunterstütztes Einziehen des Bräts in die Flügelzellen 16 ermöglicht und gleichzeitig auch dem Füllgut Luft entzieht.

Im Gegensatz zur einer erfindungsgemäßen Vorrichtung hat allerdings die Vakuumöffnung 28 bei einem bekannten Förderwerk einen konstanten, nicht veränderbaren, d.h. auch nicht (zumindest teilweise) verschliessbaren Öffnungsquerschnitt.

Da beim Betrieb dieses bekannten Vakuumfüllers die Vakuumpumpe ständig angeschaltet ist und somit durch die Vakuumöffnung 28 ständig, also auch bei nicht laufendem Förderwerk 1, ein Unterdruck in dem mit dem Einlass 19 in Verbindung stehenden Vakuumbereich 24 erzeugt wird, darf bei den bekannten Vakuumfüllern die Nuttiefe der Nutfläche 25 im Deckel 6 nur so groß sein, dass möglichst auch bei stillstehendem Förderwerk 1 keine Masse in den Vakuumkanal 29 eingezogen werden kann. Dadurch wird aber der für die Vakuumerzeugung zur Verfügung stehende wirksame Querschnitt stark beschränkt und damit ein effektives Evakuieren der zu fördernden Masse erschwert.

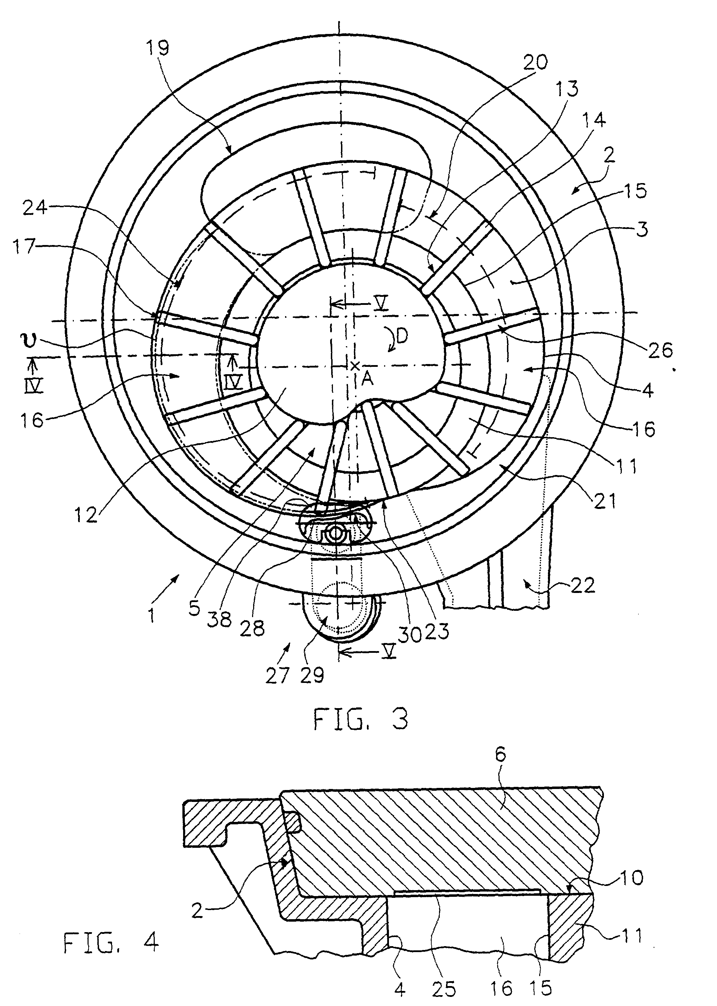

Das in den Figuren 3-6 dargestellte Flügelzellenförderwerk eines erfindungsgemäßen Vakuumfüllers weist diesen Nachteil nicht mehr auf, wie im Folgenden weiter erläutert wird. Funktionsgleiche Bauteile sind mit denselben Bezugszeichen wie in Figur 1 und 2 bezeichnet.

Im Unterschied zum Stand der Technik weist das erfindungsgemäßes Förderwerk 1 einen unmittelbar im Übergangsbereich vom Vakuumkanal 29 zum Innenraum 5 des Förderwerkgehäuses 2 angeordnetes Verschliessorgan, im konkreten Ausführungsbeispiel den Schieber 30, auf, durch den die Vakuumöffnung 28 verschlossen und zumindest teilweise wieder geöffnet werden kann. Die Vakuumöffnung 28 hat dabei einen z.B. quadratischen Querschnitt.

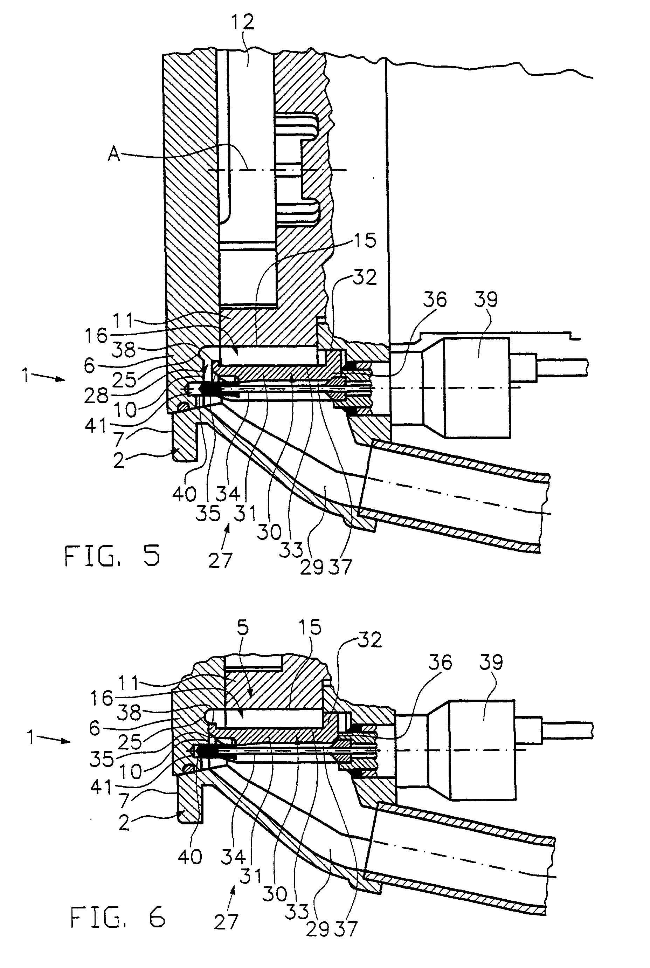

Wie insbesondere im Schnitt nach den Figuren 5 und 6 zu erkennen ist, ist der Schieber 30 parallel zur Achse A des Flügelzellenförderwerks 1 angeordnet und hat einen im wesentlichen L- förmigen Querschnitt mit zwei Schenkeln 31, 32. Der Schieber 30 ist so im Gehäuse 2 angeordnet, dass seine sich in Richtung der Achse A erstreckende, zum Innenraum 4 des Förderwerkgehäuses 2 gerichtete Fläche 33 des ersten Schenkels 31 im wesentlichen bündig zur seitlichen Gehäuseinnenwand 4 verläuft.

Diese Fläche 33 des Schiebers 30 ist dabei so geformt, dass im Betrieb die sich drehenden Flügel 14 der Flügelzellen 16 an dieser Fläche 33 entlangstreichen. Die Größe dieser zum Inneren des Förderwerkgehäuses 2 gerichtete Fläche 33 ist so gewählt, dass der Schieber 30 im in Figur 6 dargestellten Zustand die Vakuumöffnung 28 vollständig verschliessen kann.

Der Schieber 30 wird mit einem in der Wandung des Förderwerkgehäuses 2 gelagerten Federstab 34 gehalten, der sich ebenfalls in eine Richtung parallel zur Achse A des Flügelzellenförderwerks 2 erstreckt. Der längliche Federstab 34 ist dabei so schmal, dass er mit seinem über den Schieber oben überstehenden Teil die Vakuumöffnung 28 bzw. den Vakuumkanal 29 nicht wesentlich versperrt. Er weist zwei Klemmflächen 35 und 36 auf, zwischen die der Schieber 30 mit seinen dem Gehäuseinnenraum 5 abgewandten Seiten 37 in Anlage gebracht ist.

Am oberen Ende des eingeklemmten Schiebers 30 ist eine seitlich die erste Klemmfläche 35 überstehende Abdichtfläche 38 angebracht, die bei verschlossener Vakuumöffnung 28 an der Unterseite 10 des Deckels 6 zur Anlage kommt.

Das untere, dem Deckel 6 des Flügelzellengehäuses 2 abgewandte Ende des Federstabes 34 ist mit einem elektromotorischen Stellantrieb 39 verbunden, der den Federstab 34 und den daran gelagerten Schieber 30 parallel zur Achse A des Flügelzellenförderwerks 1 bewegen kann.

Der elektromotorische Stellantrieb 39 ist mit einer nicht dargestellten automatischen Steuerungseinheit verbunden, die den Stellantrieb 39 in Abhängigkeit vom Betriebszustand des Rotors 11 ansteuert.

Das dem Deckel 6 zugewandte Ende 40 des Federstabes 34 ist in der Betriebsposition in einer Bohrung 41 in der Innenseite 10 des Deckels 6 gelagert. Die Länge des Federstabes 34 und die Tiefe der Bohrung 41 sind dabei so gewählt, dass das Ende 40 des Federstabes 34 sowohl bei (zumindest teilweise) offener als auch bei vollständig verschlossener Vakuumöffnung 28 innerhalb der Bohrung 41 liegt.

Zum Reinigen kann der Schieber einfach ausgebaut werden. Dazu wird der Deckel 6 aus seiner Betriebsposition heraus aufgeklappt und der Federstab 34 kann dann, evtl. nach Abnahme des den Anfang des Vakuumkanals 29 bildenden Stutzens, nach hinten umgebogen und der Vakuumschieber 30 zu Reinigungs- oder Reparaturzwecken von dem Federstab 34 entnommen werden.

Unter Durchführung des erfindungsgemäßen Verfahrens kann mit dem erfindungsgemäßen Vakuumfüller nun wie folgt gearbeitet werden.

Zunächst wird die abzufüllende Charge, z.B. eine bestimmte Menge Wurstbrät, bei geschlossenem Deckel 6 in den Trichter 18 eingefüllt. Dabei kann die Maschine noch ausgeschaltet oder bereits eingeschaltet sein, in beiden Fällen läuft aber das Flügelzellenförderwerk noch nicht. Mit dem Einschalten läuft aber die Vakuumpumpe an und die Elektronische Steuerung geht in einen Grundzustand über. Es können dann die für den nachfolgenden Füllvorgang gewünschten Parameter wie Portionsgrösse und dgl. eingegeben werden. Während dieser Zeit bleibt der Schieber 30 geschlossen, d.h., der im Vakuumkanal 29 vor dem Schieber 30 erzeugte Unterdruck wirkt nicht auf die Flügelzellen 16 durch, sodass dort einlaufendes Brät auch nicht in den Vakuumkanal 29 eingesaugt werden kann.

Wenn nun der Abfüllvorgang beginnen soll, betätigt die Bedienungsperson einen Handoder Fussschalter, so dass das Flügelzellenförderwerk anläuft. Dabei wird dann auch ein Signal zum - etwas zeitverzögerten - Öffnen des Schiebers 30 abgegeben. Die geringfügige Zeitverzögerung - z.B. um die Durchlaufzeit einer Flügelzellenlänge - bewirkt, dass sich zunächst nun erst zwei erste Flügel 14 einer Flügelzelle 16 an dem die Vakuumöffnung 28 noch verschliessenden Schieber 30 vorbeibewegen, und eventuell an der Schieberinnenseite 33 anhaftendes Brät abstreifen.

Nach dieser Startphase öffnet der Stellantrieb 39 den Schieber 30, so dass nun das Vakuum in den Innenraum 24 durchgreifen und das Einziehen des Bräts unterstützen kann.

Die durch den Unterdruck bewirkte Rücksaugung der Luft ist dabei der Drehrichtung D der Flügelzellen 16 entgegengesetzt. Das in den Einlass 19 einlaufende Brät wird dann bei laufendem Rotor 11 durch die Flügelzellen 16 portioniert und durch den Auslass 21 an eine Abdrehvorrichtung ausgestossen.

Bei einer Arbeitsunterbrechung wird das Förderwerk stillgesetzt. Gleichzeitig oder unmittelbar anschliessend, durch den elektromotorischen Stellantrieb 39 automatisch angesteuert, fährt der Schieber 30 wieder in die Schliessposition ( Fig.6).

Weil der Unterdruck im Vakuumbereich 24 des Flügelzellenförderwerks 1 also nur bei drehendem Rotor 11 erzeugt wird, wird das Einziehen von Brät in den Vakuumkanal 29 wirksam verhindert.

Die wirksamen Absaugquerschnitte können somit größer als beim dem Stand der Technik sein, so dass eine effizientere Vakuumerzeugung möglich ist.

## Patentansprüche

1. Verfahren zum Abfüllen einer pastösen Masse, insbesondere von Wurstbrät, mit einem Vakuumfüller, wobei die pastöse Masse in ein Flügelzellenförderwerk (1) mittels drehbar gelagerte Flügelzellen (16) abgefüllt wird und in einem Bereich (24) des Flügelzellenförderwerks (1) ein Unterdruck zur Unterstützung der Einziehung der pastösen Masse in das Flügelzellenförderwerk (1) erzeugt wird, wobei der Unterdruck im wesentlichen nur bei sich drehenden Flügelzellen (16) erzeugt wird,
**dadurch gekennzeichnet, dass**
die Flügel (14) der Flügelzellen (16) an der zum Innenraum des Förderwerkgehäuses (2) gerichteten Fläche (33) eines Verschlusselements (30) einer Vakuumöffnung (28) entlang streichen .

2. Verfahren nach Anspruch 1, **dadurch gekennzeichnet, dass** die durch den Unterdruck bewirkte Rücksaugung entgegengesetzt zur Drehrichtung (D) der Flügelzellen (16) gerichtet ist.

3. Verfahren nach einem der vorherigen Ansprüche, **dadurch gekennzeichnet, dass** der Unterdruck erst dann erzeugt wird, wenn sich eine der Flügelzellen (16) an einer Vakuumöffnung (28) des Flügelzellenförderwerks (1) zur Erzeugung des Unterdrucks vorbeibewegt hat.

4. Verfahren nach einem der vorherigen Ansprüche, **dadurch gekennzeichnet, dass** der Unterdruck automatisch bei sich drehenden Flügelzellen (16) erzeugt wird.

5. Vakuumfüller zur Durchführung des Verfahrens nach Anspruch 1, mit einem Flügelzellenförderwerk (1) zum Abfüllen einer pastösen Masse, insbesondere von Wurstbrät, das ein Förderwerkgehäuse (2) mit einem Flügelzellen (16) bildenden Rotor (11) umfasst, wobei eine über einen Vakuumkanal (29) mit einer Vakuumquelle in Verbindung stehende Vakuumöffnung (28) am Förderwerkgehäuse (2) angeordnet ist, über die in einem Bereich (24) des Flügelzellenförderwerks (1) ein Unterdruck zur Unterstützung der Einziehung der pastösen Masse in das Flügelzellenförderwerk (1) erzeugbar ist, wobei ein Verschlusselement (30) zum zumindest teilweise Öffnen und Verschliessen der Vakuumöffnung (28) vorgesehen ist,
**dadurch gekennzeichnet, dass**
das Verschlusselement (30) mit seiner zum Innenraum (5) des Förderwerkgehäuses (2) gerichteten Fläche (33) so angebracht und ausgebildet ist, dass die Flügel (14) der Flügelzellen (16) an dieser Fläche (33) entlang streichen.

6. Vakuumfüller nach Anspruch 5, **dadurch gekennzeichnet, dass** das Verschlusselement (30) im Übergangsbereich vom Vakuumkanal (29) zum Innenraum des Förderwerkgehäuses (2) angeordnet ist.

7. Vakuumfüller nach einem der Ansprüche 5 oder 6, **dadurch gekennzeichnet, dass** die Vakuumöffnung (28) in einem oberen Bereich der Wandung (4) des Flügelzellenförderwerks (1) angeordnet ist.

8. Vakuumfüller nach einem der Ansprüche 5 bis 7, **dadurch gekennzeichnet, dass** das Verschlusselement (30) einen Schieber (30) umfasst.

9. Vakuumfüller nach Anspruch 8, **dadurch gekennzeichnet, dass** der Schieber (30) an einem in der Wandung des Förderwerkgehäuses (2) gelagerten Federstab (34) lösbar angeordnet ist.

10. Vakuumfüller nach einem der Ansprüche 5 bis 9, **dadurch gekennzeichnet, dass** ein elektromotorischer Stellantrieb (39) oder ein Pneumatikzylinder mit dem Verschlusselement (30) verbunden ist.

11. Vakuumfüller nach Anspruch 10, **dadurch gekennzeichnet, dass** eine automatische Steuerungseinheit mit dem elektromotorischen Stellantrieb (39) oder dem Pneumatikzylinder verbunden ist zur Steuerung des Stellantriebs (39) oder des Pneumatikzylinders in Abhängigkeit vom Betriebszustand des Rotors (11).

## Claims

1. Method for filling a pasty material, in particular sausage meat, with a vacuum filler, said pasty material being filled into a vane-type conveying mechanism (1) by means of rotatably supported vane cells (16) and a negative pressure being produced in a region (24) of said vane-type conveying mechanism (1) for supporting the intake of said pasty material into said vane-type conveying mechanism (1), the negative pressure being substantially produced only in the rotating state of said vane cells (16),
**characterized in that**
the vanes (14) of said vane cells (16) sweep along the surface (33) of a closure element (30) of a vacuum opening (28) that is directed towards the inner chamber of the housing (2) of said conveying mechanism.

2. The method according to claim 1,
**characterized in that**
the rearward suction effected by said negative pressure is in a direction opposite to the rotational direction (D) of said vane cells (16).

3. The method according to any one of the preceding claims,
**characterized in that**
said negative pressure will only be produced if one of said vane cells (16) has moved past a vacuum opening (28) of said vane-type conveying mechanism (1) for producing said negative pressure.

4. The method according to any one of the preceding claims,
**characterized in that**
said negative pressure is automatically produced while said vane cells (16) are rotating.

5. A vacuum filler for performing the method according to claim 1, comprising a vane-type conveying mechanism (1) for filling a pasty material, in particular sausage meat, said conveying mechanism comprising a housing (2) including a rotor (11) forming vane cells (16), wherein a vacuum opening (28) which communicates via a vacuum channel (29) with a vacuum source is arranged on the housing (2) of said conveying mechanism, and a negative pressure can be produced via said vacuum opening (28) in a region (24) of said vane-type conveying mechanism (1) for supporting the intake of said pasty material into said vane-type conveying mechanism (1), wherein a closure element (30) is provided for at least partly opening and closing said vacuum opening (28),
**characterized in that**
said closure element (30) is mounted and designed with its surface (33) directed toward the inner chamber (5) of the housing (2) of said conveying mechanism in such a manner that the vanes (14) of said vane cells (16) sweep along said surface (33).

6. The vacuum filler according to claim 5,
**characterized in that**
said closure element (30) is arranged in the transitional region extending from said vacuum channel (29) to the inner chamber of the housing (2) of said conveying mechanism.

7. The vacuum filler according to any one of claims 5 or 6,
**characterized in that**
said vacuum opening (28) is arranged in an upper region of the wall (4) of said vane-type conveying mechanism (1).

8. The vacuum filler according to any one of claims 5 to 7,
**characterized in that**
the closure element (30) comprises a slide (30).

9. The vacuum filler according to claim 8,
**characterized in that**
said slide (30) is detachably arranged on a spring bar (34) supported in the wall of the housing (2) of said conveying mechanism.

10. The vacuum filler according to any one of claims 5 to 9,
**characterized in that**
an electromotive actuator (39) or a pneumatic cylinder is connected to said closure element (30).

11. The vacuum filler according to claim 10,
**characterized in that**
an automatic control unit is connected to said electromotive actuator (39) or said pneumatic cylinder for controlling said actuator (39) or said pneumatic cylinder in response to the operative state of said rotor (11).

## Revendications

1. Procédé de remplissage d'une masse pâteuse, en particulier de chair à saucisse, présentant un remplisseur sous vide, dans lequel la masse pâteuse est remplie dans un convoyeur à palettes (1) présentant des cellules (16) supportées en rotation et une dépression pour aider la pénétration de la masse pâteuse dans le convoyeur à palettes (1) est créée dans une zone (24) du convoyeur à palettes (1), la dépression étant essentiellement créée uniquement lorsque les cellules (16) tournent,
**caractérisé en ce que**
les palettes (14) des cellules (16) frottent le long de la surface (33) orientée vers l'espace intérieur du carter de convoyeur à palettes (2) d'un élément obturateur (30) d'une ouverture de vide (28).

2. Procédé selon la revendication 1, **caractérisé en ce que** l'aspiration provoquée par la dépression est orientée à l'opposé de la direction de rotation (D) des cellules (16).

3. Procédé selon l'une des revendications précédentes, **caractérisé en ce que** la dépression n'est créée que lorsqu'une cellule (16) a dépassé une ouverture de vide (28) du convoyeur à palettes (1) pour la création de la dépression.

4. Procédé selon l'une des revendications précédentes, **caractérisé en ce que** la dépression est automatiquement créée lorsque les cellules (16) sont en rotation.

5. Remplisseur sous vide pour la mise en oeuvre du procédé selon la revendication 1, présentant un convoyeur à palettes (1) pour le remplissage d'une masse pâteuse, en particulier de chair à saucisse, qui comporte un carter de convoyeur à palettes (2) avec un rotor (11) formant des cellules (16), dans lequel une ouverture de vide (28) en liaison avec une source de vide par l'intermédiaire d'un canal de vide (29) est disposée sur le carter de convoyeur à palettes (2), par laquelle une dépression peut être créée dans une zone (24) du convoyeur à palettes (1) pour aider la pénétration de la masse pâteuse dans le convoyeur à palettes (1), dans lequel est prévu un élément obturateur (30) pour l'ouverture au moins partielle et la fermeture de l'ouverture de vide (28),
**caractérisé en ce que**
l'élément obturateur (30) avec sa surface (33) orientée vers l'espace intérieur du carter de convoyeur (2) est agencé et réalisé de telle sorte que les palettes (14) des cellules (16) frottent le long de cette surface (33).

6. Remplisseur sous vide selon la revendication 5, **caractérisé en ce que** l'élément obturateur (30) est disposé dans la zone de transition du canal de vide (29) à l'espace intérieur du carter de convoyeur (2).

7. Remplisseur sous vide selon l'une des revendications 5 ou 6, **caractérisé en ce que** l'ouverture de vide (28) est disposée dans une zone supérieure de la paroi (4) du convoyeur à palettes (1).

8. Remplisseur sous vide selon l'une des revendications 5 à 7, **caractérisé en ce que** l'élément obturateur (30) comporte un coulisseau (30).

9. Remplisseur sous vide selon la revendication 8, **caractérisé en ce que** le coulisseau (30) est disposé de manière amovible sur une tige élastique (34) logée dans la paroi du carter de convoyeur (2).

10. Remplisseur sous vide selon l'une des revendications 5 à 9, **caractérisé en ce qu**'un actionneur électromoteur (39) ou un vérin pneumatique est en liaison avec l'élément obturateur (30).

11. Remplisseur sous vide selon la revendication 10, **caractérisé en ce qu**'une unité de commande automatique est reliée à l'actionneur électromoteur (39) ou au vérin pneumatique pour commander l'actionneur électromoteur (39) ou le vérin pneumatique en fonction de l'état de service du rotor
